(19) Europäisches Patentamt
European Patent Office
Office européen des brevets

(11) EP 4 576 387 A1

(12) # EUROPEAN PATENT APPLICATION

(43) Date of publication:
**25.06.2025 Bulletin 2025/26**

(21) Application number: **24219627.7**

(22) Date of filing: **12.12.2024**

(51) International Patent Classification (IPC):
***H01M 50/403*** *(2021.01)* ***H01M 50/446*** *(2021.01)*
***H01M 50/489*** *(2021.01)* ***H01M 50/451*** *(2021.01)*
*H01M 10/052* *(2010.01)*

(52) Cooperative Patent Classification (CPC):
**H01M 50/403; H01M 50/446; H01M 50/451; H01M 50/489;** H01M 10/052; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.12.2023 KR 20230185300**

(71) Applicants:
- **SK Innovation Co., Ltd.**
**Seoul 03188 (KR)**
- **SK ie technology Co., Ltd.**
**Jongno-gu**
**Seoul**
**03188 (KR)**

(72) Inventors:
- **KWON, Tae Wook**
**34124 Daejeon (KR)**
- **CHANG, Kyeol**
**34124 Daejeon (KR)**
- **JI, Sang Yoon**
**34124 Daejeon (KR)**
- **LEE, Soon Bo**
**34124 Daejeon (KR)**

(74) Representative: **Prüfer & Partner mbB**
**Patentanwälte · Rechtsanwälte**
**Sohnckestraße 12**
**81479 München (DE)**

(54) **SEPARATOR AND LITHIUM SECONDARY BATTERY INCLUDING THE SAME; AND METHOD OF MANUFACTURING THE SEPARATOR**

(57) Provided are a separator having significantly improved heat resistance and a lithium secondary battery including the same. According to an aspect of the present disclosure, a separator including: a porous substrate; and an inorganic particle layer which is formed on at least one surface of the porous substrate and includes a binder and inorganic particles, wherein the separator has a ratio of a total thickness of the inorganic particle layer to a thickness of the porous substrate of 0.2 to 0.6, has a peak shown in a range of 1070 $cm^{-1}$ to 1082 $cm^{-1}$ in a spectrum by Fourier transform infrared spectroscopy (FT-IR), and has heat shrinkage rates in the machine direction and in the transverse direction of 5% or less as measured after being allowed to stand at 150°C for 60 minutes is provided.

EP 4 576 387 A1

## Description

### TECHNICAL FIELD

The following disclosure relates to a separator having significantly improved heat resistance and a lithium secondary battery including the same. The following disclosure relates to a method for manufacturing a separator.

### BACKGROUND

A separator of a battery in an electrochemical device is very important for improving stability, lifespan, and performance of the battery. The main function of the separator is to provide an ion migration path in a battery and prevent physical contact between a negative electrode and a positive electrode, and a battery having excellent performance may be manufactured by improving the characteristics of the separator.

In order to improve the characteristics of the separator used in the battery, a multilayer separator is formed by laminating a polyolefin-based porous polymer, or a separator having a coating layer formed thereon by mixing a binder, inorganic particles, and possibly other components on a porous polymer used as a substrate is being developed. The multilayer separator or the coating layer in which a binder and possibly further components are mixed may improve various characteristics of a separator as compared with a single-layer separator, but the thickness of the separator may be increased, and the performance of a battery may be rather degraded due to low permeability, decreased wettability, and reduced impregnation. In order to solve the problems as such, research for manufacturing a separator which has various sufficiently appropriate characteristics for the separator of a battery, is thin, and satisfies mechanical and chemical stability to improve battery performance is in progress.

### SUMMARY

An embodiment of the present disclosure is directed to providing a separator having excellent heat resistance and adhesion.

Another embodiment of the present disclosure is directed to providing a lithium secondary battery having excellent resistance properties and thermal safety.

The separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and other items for preventing climate change by suppressing air pollution and greenhouse gas emissions.

In one general aspect, a separator includes: a porous substrate; and an inorganic particle layer including a binder and inorganic particles on one or respectively on both surface(s) of the porous substrate, wherein the separator has a ratio of a total thickness of the inorganic particle layer(s) to a thickness of the porous substrate of 0.2 to 0.6, has a peak shown in a range of 1070 $cm^{-1}$ to 1082 $cm^{-1}$ in a spectrum by Fourier transform infrared spectroscopy (FT-IR), and has heat shrinkage rates in the machine direction and in the transverse direction of 5% or less as measured after being allowed to stand at 150°C for 60 minutes.

In an example embodiment, the inorganic particles may include any one or two or more selected from the group consisting of metal hydroxides, metal oxides, metal nitrides, and metal carbides.

In an example embodiment, the inorganic particles may have an average particle diameter (D50) of 0.01 um to 0.65 μm.

In an example embodiment, the inorganic particles may include first type of inorganic particles having an average particle diameter (D50) of 0.01 um to 0.5 μm.

In an example embodiment, the inorganic particles may further include second type of inorganic particles having a larger average particle diameter (D50) than the first type of inorganic particles.

In an example embodiment, the second type of inorganic particles may be included at 50 wt% or less based on the total weight of the first type of inorganic particles and the second inorganic particles.

In an example embodiment, the heat shrinkage rates in the machine direction and in the transverse direction may be 3% or less.

In an example embodiment, the porous substrate may have a thickness of 5 um to 15 μm.

In an example embodiment, the binder may include a polyacrylamide-based resin.

In an example embodiment, the polyacrylamide-based resin may be a copolymer including a unit derived from a (meth)acrylamide-based monomer and a unit derived from a comonomer.

In an example embodiment, the polyacrylamide-based resin may include a structural unit derived from the (meth) acrylamide-based monomer and a structural unit derived from a (meth)acryl-based monomer containing a hydroxyl group.

In embodiment example embodiment, the polyacrylamide-based resin may have a weight average molecular

weight of 100,000 g/mol to 2,000,000 g/mol.

In an example embodiment, the binder may be included at 0.1 parts by weight to 20 parts by weight with respect to 100 parts by weight of the inorganic particles.

In an example embodiment, the binder may include a combination of two or more different binders. This first binder may be the aforementioned polyacrylamide-based resin. The additional binder may be any one or two or more additional binders selected from the group consisting of polyvinyl alcohol, polyvinylidene fluoride, carboxymethyl cellulose, styrene butadiene rubber, polyacrylic acid, polyethylene glycol, polyacrylonitrile, polyvinylpyrrolidone, copolymers thereof and combinations thereof.

In an example embodiment, a content of the additional binder may be 0.1 wt% to 30 wt% of the total content of the binder.

In another general aspect of the present disclosure, a method for manufacturing a separator comprises: providing a porous substrate; a step of preparing a coating slurry including a binder and inorganic particles; and a step of applying the coating slurry on one or both surfaces of the porous substrate to form an inorganic particle layer respectively on one or both surfaces of the porous substrate; wherein the separator obtained has a ratio of a total thickness of the inorganic particle layer(s) to a thickness of the porous substrate of 0.2 to 0.6, and the separator has a peak shown in a range of 1070 $cm^{-1}$ to 1082 $cm^{-1}$ in a spectrum by Fourier transform infrared spectroscopy (FT-IR).

In an example embodiment, the peak shown in the range of 1070 $cm^{-1}$ to 1082 $cm^{-1}$ is indicative of the binding energy between atoms included in the inorganic particles included in the inorganic particle layer, and presence or absence of the peak shown in the range of 1070 $cm^{-1}$ to 1082 $cm^{-1}$ is determined by any one of: the characteristics of the inorganic particles, the average particle diameter and materials, characteristics of the binder or of the porous substrate.

In another example embodiment, the method is used to manufacture the separator of the present disclosure by controlling one or more of: the thicknesses of the porous substrate and of the one or two inorganic particle layers coated on the one or both surfaces of the porous substrate, the average particle diameter of the inorganic particles, the combination of first and second types of inorganic particles, the weight ratio of a plurality of inorganic particles, the type and content of a binder, the type and content of an additionally used second type of binder, and the surface characteristics of the porous substrate.

In another general aspect, a secondary battery includes the separator as described above.

Other features and aspects will be apparent from the following detailed description, the drawings, and the claims.

## DETAILED DESCRIPTION OF EMBODIMENTS

Hereinafter, the present disclosure will be described in detail. However, the embodiments described in the present specification may be modified in many different forms, and the technology according to an example embodiment is not limited to the embodiments set forth herein. In addition, the embodiment of an example embodiment is provided so that the present disclosure will be further fully described to a person with ordinary skill in the art.

In addition, a singular form used in the specification and claims appended thereto may be intended to include a plural form also, unless otherwise indicated in the context.

In addition, a numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Furthermore, throughout the specification, unless explicitly described to the contrary, "comprising" any constituent elements will be understood to imply further inclusion of other constituent elements rather than exclusion of other constituent elements.

Hereinafter, unless otherwise particularly defined in the present specification, "(meth)acryl" refers to acryl and/or methacryl.

Unless otherwise defined in the present specification, an average particle diameter of inorganic particles refers to a D50 value. D50 refers to a particle diameter of inorganic particles corresponding to 50% in terms of a volume-based integrated fraction. The average particle diameter may be derived from particle size distribution results obtained by collecting a sample of inorganic particles to be measured in accordance with the standard of ISO 13320-1 and performing analysis using S3500 available from MICROTRAC.

In the present specification, when it is described that an element such as a layer, film, region, or substrate is referred to as being "on" or "above" another element, it may be "directly on" the other element or intervening elements may also be present.

The terms such as "first" and "second" used in the present specification may be used to describe various constituent elements, but the constituent elements are not to be limited to the terms. The terms are used only to differentiate one constituent element from other constituent elements.

In the present specification, "MD (machine direction)" refers to the longitudinal direction of a porous substrate and a separator manufactured in a long shape, and "TD (transverse direction)" refers to a direction orthogonal to "MD direction" in a surface direction of the porous substrate and a separator. In the disclosure, "TD" also refers to a width direction.

An example embodiment provides a separator, which may be used in a battery having high heat resistance and adhesion and excellent resistance properties. Specifically, the separator according to an example embodiment includes: a porous substrate; and an inorganic particle layer including a binder and inorganic particles on at least one surface of the porous substrate (i.e. may be provided above one surface or above both surfaces of the porous substrate - preferably may be provided on or above both surfaces of the porous substrate), wherein the separator has a ratio of a total thickness of the inorganic particle layer(s) (i.e. optionally the thickness of one layer if provided only on one surface, or the total of the thicknesses of both layers if provided on both surface of the porous substrate) to a thickness of the porous substrate of 0.2 to 0.6, has a peak shown in a range of 1070 $cm^{-1}$ to 1082 $cm^{-1}$ (hereinafter, referred to as a first peak) in a spectrum by Fourier transform infrared spectroscopy (FT-IR), and has heat shrinkage rates in the machine direction and in the transverse direction of 5% or less as measured after being allowed to stand at 150°C for 60 minutes. It was first recognized that the separator according to an example embodiment satisfies the ratio between the inorganic particle layer and the porous substrate of 0.2 to 0.6 and also the peak of 1070 $cm^{-1}$ to 1082 $cm^{-1}$ shown in the FT-IR spectrum, thereby having a significantly decreased high temperature heat shrinkage rate, and thus, the separator was invented.

When the present disclosure refers to "a" or "the" inorganic particle layer, it is meant to refer generally to the one or two inorganic particle layer(s) respectively disposed directly on, or disposed above with an optional disposal of an intermediate layer therebetween, the one or both surface(s) of the porous substrate.

In addition, the lithium secondary battery according to an example embodiment may have both excellent resistance properties and thermal safety, by including the separator which satisfies both the first peak in the specific range shown in the FT-IR spectrum and a thickness ratio between the inorganic particle layer and the porous substrate in a specific range. Specifically, since the lithium secondary battery according to an example embodiment may show significantly low discharge resistance after 600 cycles, it may have improved charge and discharge performance.

The effect results from adjustment of the thickness ratio between the inorganic particle layer and the porous substrate and the peak shown in the FT-IR spectrum to each specific range and is not affected only by the constituent element of the separator or any specific element during the manufacturing process of the separator. As confirmed in an example embodiment, the thickness ratio and peak may be implemented by various means including various factors, such as, the thickness of each layer of the separator, the average particle diameter of the inorganic particles, the combination of the inorganic particles, the weight ratio of a plurality of inorganic particles, the type and content of binder, the type and content of an additionally used binder, and the surface characteristics of the porous substrate. The means is not particularly limited as long as the effect may be achieved. For example, the first peak may be derived from binding energy between atoms included in the inorganic particles included in the inorganic particle layer, and the range of the first peak is not determined only by the characteristics of the inorganic particles themselves such as the average particle diameter and materials, but may be determined by various factors such as characteristics of the binder or the porous substrate other than the inorganic particles.

In an example embodiment, the first peak is a peak having the highest intensity in a range of 1070 $cm^{-1}$ to 1082 $cm^{-1}$, and specifically, may be a peak having the highest intensity in a range of 1071 $cm^{-1}$ to 1081 $cm^{-1}$ or in a range of 1072 $cm^{-1}$ to 1081 $cm^{-1}$.

In an example embodiment, the separator may further have a second peak shown in a range of 1140 $cm^{-1}$ to 1160 $cm^{-1}$ in the FT-IR spectrum. The second peak may be a peak having the highest intensity in the range described above, and specifically, may be a peak having the highest intensity in a range of 1145 $cm^{-1}$ to 1155 $cm^{-1}$.

In an example embodiment, the separator may further have a third peak shown in a range of 2910 $cm^{-1}$ to 2930 $cm^{-1}$ in the FT-IR spectrum. The third peak is a peak having the highest intensity in the range described above, and specifically, may be a peak having the highest intensity in a range of 2915 $cm^{-1}$ to 2925 $cm^{-1}$ or in a range of 2915 $cm^{-1}$ to 2920 $cm^{-1}$.

In an example embodiment, the separator may further have a fourth peak shown in a range of 3090 $cm^{-1}$ to 3100 $cm^{-1}$ in the FT-IR spectrum. The fourth peak is a peak having the highest intensity in the range described above, and specifically, may be a peak having the highest intensity in a range of 3095 $cm^{-1}$ to 3100 $cm^{-1}$.

In an example embodiment, the separator may further have a fifth peak shown in a range of 3270 $cm^{-1}$ to 3300 $cm^{-1}$ in the FT-IR spectrum. The fifth peak is a peak having the highest intensity in the range described above, and specifically, may be a peak having the highest intensity in a range of 3280 $cm^{-1}$ to 3300 $cm^{-1}$ or in a range of 3285 $cm^{-1}$ to 3300 $cm^{-1}$.

In an example embodiment, the FT-IR spectrum of the separator may be measured using a FT-IR instrument equipped with a mercury cadmium telluride (MCT) detector, and specifically, may be measured in a transmission mode by scanning 5 to 200 times at a resolution of 4 $cm^{-1}$ in a range of 4000 $cm^{-1}$ to 675 $cm^{-1}$.

In an example embodiment, the inorganic particles are not limited as long as they are inorganic particles used in the art. As a non-limiting example, the inorganic particles may include any one or two or more selected from the group

consisting of metal hydroxides, metal oxides, metal nitrides, and metal carbides. For example, the inorganic particles may include any one or two or more selected from the group consisting of magnesium oxide (MgO), magnesium hydroxide ($Mg(OH)_2$), alumina ($Al_2O_3$), boehmite ($\gamma$-AlO(OH)), aluminum hydroxide ($Al(OH)_3$), silica ($SiO_2$), silicon carbide (SiC), calcium oxide (CaO), titanium dioxide ($TiO_2$), strontium titanate ($SrTiO_3$), zinc oxide (ZnO), yttrium oxide ($Y_2O_3$), zirconium oxide ($ZrO_2$), tin oxide ($SnO_2$), and cerium oxide ($CeO_2$). In terms of battery stability and related properties, the inorganic particles may be preferably any one or two or more metal hydroxide particles selected from the group consisting of boehmite, aluminum hydroxide ($Al(OH)_3$), and magnesium hydroxide ($Mg(OH)_2$).

In an example embodiment, the shape of the inorganic particles is not limited, and may be spherical, oval, needle-shaped, plate or plate-like shape, and similar shapes.

In an example embodiment, the inorganic particles may have an average particle diameter (D50) of 0.01 um or more, 0.05 um or more, 0.1 um or more and 0.65 um or less, 0.5 um or less, 0.4 um or less, 0.3 um or less, or a value between the numerical values. For example, the D50 of the inorganic particles may be 0.01 um to 0.65 um, 0.01 um to 0.5 um, 0.05 um to 0.4 um, 0.1 um to 0.3 um, or 0.2 um to 0.3 um, but may be changed unless it goes beyond the scope of the present disclosure.

In an example embodiment, the inorganic particles may include the first type of inorganic particles having the average particle diameter (D50) of 0.01 um to 0.5 um, and the D50 of the first type of inorganic particles may be 0.05 um to 0.4 um, 0.1 um to 0.3 um, or 0.2 um to 0.3 $\mu$m.

In an example embodiment, the inorganic particles may include the first type of inorganic particles and second type of inorganic particles having a larger average particle diameter (D50) than the first type of inorganic particles. Specifically, the inorganic particles may include the first type of inorganic particles and the second type of inorganic particles within a range in which the average particle diameter (D50) satisfies the range described above. The second type of inorganic particles may have the average particle diameter (D50) of 0.4 um to 1.0 um, 0.5 um to 0.9 um, 0.6 um to 0.8 um, or 0.7 um to 0.8 $\mu$m.

In an example embodiment, the second type of inorganic particles may be included at 50 wt% or less, 40 wt% or less, 35 wt% or less, 30 wt% or less and 1 wt% or more, 10 wt% or more, or a value between the numerical values, based on the total weight of the first type of inorganic particles and the second type of inorganic particles. For example, the content of the second inorganic particles may be 1 wt% to 50 wt%, 1 wt% to 45 wt%, 10 wt% to 40 wt%, or 30 wt% to 40 wt%, based on the total weight of the first type of inorganic particles and the second type of inorganic particles. For example, a weight ratio of first inorganic particles : second inorganic particles may be 50~99:1~50. For example, the weight ratio of first inorganic particles : second inorganic particles may be 60~99:1~40, 70~99:1~30. When the weight ratio in the range described above is satisfied, a separator having better heat resistance may be provided.

The first type of inorganic particles and the second type of inorganic particles may be composed of the same or different inorganic materials. When first type of inorganic particles and second type of inorganic particles are used which are respectively composed of the same inorganic materials, they can be distinguished by different particle size distributions, respectively different D50 values.

The separator according to an example embodiment may have excellent heat resistance. In an example embodiment, heat shrinkage rates in the machine direction and in the transverse direction of the separator which are measured after being allowed to stand at 150°C for 60 minutes may be 5% or less, 4% or less, 3.5% or less, 3% or less, 2.5% or less, 2% or less, or 1.5% or less. For example, it may be 0.1 to 5% or 0.2 to 3.5%.

In an example embodiment, the thickness of the porous substrate is not necessarily limited thereto, but may be 5 um or more, 8 um or more and 15 $\mu$m or less, 12 $\mu$m or less, or a value between the numerical values. For example, the average thickness of the porous substrate may be 5 um to 15 um, 8 um to 12 um, or 9 um to 12 um. Herein, the thickness of the porous substrate refers to an average thickness, and an average thickness of only the porous substrate having no inorganic particle layer provided thereon. In an example embodiment, the average thickness of the porous substrate may be determined by the following method: stacking the substrates (having no inorganic particle layer provided thereon) are stacked in 10 layers; measuring the thickness of the 10 layers at 5 random points in the Transverse direction(TD) with a thickness meter available from Mitutoyo; dividing the sum of the thicknesses at the 5 random points by 5 to derive an average thickness of the 10-layer porous substrate; and dividing the average thickness of the 10-layer by 10 to derive the average thickness $t_2$ of the porous substrate. In the case in which the average thickness of the porous substrate having the inorganic particle layer provided on at least one surface is determined, the inorganic particle layer is released using any method known in the art without limitation and is sufficiently dried, and then the average thickness of the porous substrate from which the inorganic particle layer has been released may be determined.

In an example embodiment, the inorganic particle layer may be coated on one or both surfaces of the porous substrate, and when the inorganic particle layer is coated on both surfaces of the porous substrate, the thickness of the inorganic particle layer coated on one surface and that on the other surface may be the same as or different from each other.

In an example embodiment, the total thickness $t_1$ of the inorganic particle layer(s) is not necessarily limited thereto, but may be 0.5 um or more, 1 um or more, 1.5 um or more and 9 $\mu$m or less, 6 $\mu$m or less, or a value between the

numerical values. For example, the total thickness of the inorganic particle layer(s) may be 0.5 um to 9 um, 1 um to 6 um, 1.5 um to 6 um, or 2 um to 6 um. Herein, the total thickness of the inorganic particle layer(s) may be determined by subtracting the average thickness of the porous substrate from the total average thickness of the separator. Herein, an overall average thickness of a separator refers to an overall average thickness of a separator including a porous substrate and inorganic particle layer(s) provided on at least one surface of the porous substrate, i.e. an inorganic particle layer provided on one, or optionally inorganic particle layers respectively provided on both surfaces of the porous substrate. In an example embodiment, the overall average thickness t of the separator may be determined by the following method: stacking the separators in 10 layers; measuring the thickness of the 10 layers at 5 random points in the transverse direction(TD) by a thickness meter available from Mitutoyo; dividing the sum of the thicknesses at the 5 random points by 5 to derive an average thickness of the 10 layers; and dividing the average thickness of the 10 layers by 10 to derive the overall average thickness of a single separator. For example, the average thickness of the separator may be 5 um to 25 um or 6 um to 20 μm.

In an example embodiment of the present disclosure, a ratio $t_1/t_2$ of the total thickness $t_1$ of the inorganic particle layer to the thickness $t_2$ of the porous substrate may be 0.2 to 0.6. Within the range, effects of excellent heat resistance of a heat shrinkage rate of 5% or less, excellent adhesive strength, and low discharge resistance after 600 cycles of a battery may be provided simultaneously.

In an example embodiment, the porous substrate may be a polyolefin-based porous substrate such as polyethylene, polypropylene, or copolymers thereof, but is not limited thereto, and any porous substrate known as a porous substrate of a separator of a lithium secondary battery may be used. In an example embodiment, the porous substrate may be manufactured into a film or sheet, but is not particularly limited.

In an example embodiment, the porous substrate may have a porosity of 20 to 60%, 30 to 60%, 40 to 50% or 40 to 43%, but is not limited thereto.

In an example embodiment, the inorganic particle layer may include a binder and inorganic particles, and may be a porous inorganic particle layer in which the inorganic particles are connected and fixed by the binder to form pores. In an example embodiment, the inorganic particle layer is provided on at least one surface of the porous substrate, may occupy an area fraction of 60% or more, 70% or more, 80% or more, or 90% or more, based on the total surface of the porous substrate, and preferably, may be formed on the area of the porous substrate of 100%.

In an example embodiment, the binder may include a polyacrylamide-based resin. The polyacrylamide-based resin may be polyacrylamide or a copolymer including the same. The copolymer may be a block copolymer or a random copolymer, but the copolymer described in an example embodiment of the present disclosure refers to a random copolymer which is polymerized by mixing two or more monomers together.

In an example embodiment, the polyacrylamide-based resin may be a copolymer including a unit derived from a (meth)acrylamide-based monomer and a unit derived from a comonomer. Preferably, the polyacrylamide-based resin may include a structural unit derived from the (meth)acrylamide-based monomer and a structural unit derived from a (meth) acryl-based monomer containing a hydroxyl group.

Since the separator according to an example embodiment includes the above copolymer rather than a homopolymer derived from an acrylamide-based monomer, heat resistance and adhesion may be further improved. In addition, since the lithium secondary battery includes the separator, it may have better resistance properties and thermal safety.

The unit derived from the (meth)acrylamide-based monomer of the polyacrylamide-based resin may be represented by the following Chemical Formula 1:

[Chemical Formula 1]

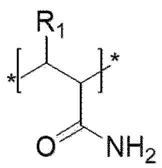

wherein $R_1$ is hydrogen or a C1 to C6 alkyl group.

The unit derived from the hydroxyl group-containing (meth)acryl-based monomer of the polyacrylamide-based resin may be represented by the following Chemical Formula 2:

[Chemical Formula 2]

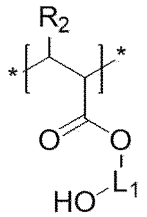

wherein $R_2$ is hydrogen or a C1 to C6 alkyl group. In addition, $L_1$ is a linear or branched C1 to C6 alkylene group.

In the polyacrylamide-based resin according to an example embodiment, the (meth)acrylamide-based monomer may be included at 65 to 98 mol%, 70 to 97 mol%, or 75 to 95 mol%. The (meth)acryl-based monomer containing a hydroxyl group may be included at 2 to 35 mol%, 3 to 30 mol%, or 5 to 25 mol%. When the polyacrylamide-based resin is prepared within the content range, sufficient adhesive strength may be obtained, and a more significant effect may be obtained at a shrinkage rate at a high temperature.

In an example embodiment, the polyacrylamide-based resin may have a weight average molecular weight in terms of polyethylene glycol of 100,000 g/mol or more, 200,000 g/mol or more and 2,000,000 g/mol or less, 1,000,000 g/mol or less, 500,000 g/mol or less, or a value between the numerical values as measured using gel permeation chromatography. For example, the polyacrylamide-based resin may have a weight average molecular weight of 100,000 to 2,000,000 g/mol, 200,000 to 1,000,000 g/mol, or 200,000 to 500,000 g/mol. According to an example embodiment, when the weight average molecular weight of the polyacrylamide-based resin satisfies the above range, heat resistance and adhesion may be further improved.

In an example embodiment, a content of the binder may be appropriately adjusted according to the situation and purpose within a range of the present disclosure. For example, the content of the binder may be 0.1 parts by weight to 20 parts by weight, 0.1 parts by weight to 15 parts by weight, 1 part by weight to 10 parts by weight, or 1 part by weight to 5 parts by weight, with respect to 100 parts by weight of the inorganic particles.

In an example embodiment, the binder may further include any one or two or more second type of binders, in addition to a polyacrylamide-based resin as a first binder. second addition binders may be selected from the group consisting of polyvinyl alcohol (PVA), polyvinylidene fluoride (PVDF), carboxymethyl cellulose (CMC), styrene-butadiene rubber (SBR), polyacrylic acid (PAA), polyethylene glycol (PEG), polyacrylonitrile (PAN), polyvinylpyrrolidone (PVP), copolymers thereof, and combinations thereof. Since the separator according to an example embodiment uses the additional binder described above with the polyacrylamide-based resin as a binder, heat resistance and adhesion may be further improved.

In an example embodiment, a content of the additional binder may be 0.1 wt% or more, 0.5 wt% or more, 1 wt% or more, 5 wt% or more and 30 wt% or less, 20 wt% or less, 15 wt% or less, or a value between the numerical values. For example, the content of the additional binder may be 0.1 to 30 wt%, 0.5 to 30 wt%, 1 to 20 wt%, or 5 to 15 wt%, but is not necessarily limited thereto.

In an example embodiment, a degree of saponification when the additional binder is polyvinyl alcohol may be 80 mol% to 95 mol% or 85 mol% to 90 mol%, but is not particularly limited thereto. The degree of saponification of polyvinyl alcohol (PVA) refers to a degree of saponification in which the ester group in a polyester system is converted into an alcohol group. The degree of saponification may be a value measured by a known method such as JIS K6726.

In an example embodiment, the additional binder may have a weight average molecular weight of 10,000 to 100,000 g/mol or 30,000 to 70,000 g/mol, but is not particularly limited thereto.

Hereinafter, a method for manufacturing a separator of the present disclosure will be described.

The method for manufacturing the separator satisfying the physical properties described above simultaneously may include: a first step of preparing a coating slurry including a binder and inorganic particles; and a second step of applying the coating slurry on at least one surface of a porous substrate to form an inorganic particle layer.

Since the description of each of the porous substrate, the inorganic particle layer, the inorganic particles, and the binder is as described above, detailed description thereof will be omitted.

Any common method known in the art may be applied to the method for preparing a coating slurry in the first step without limitation, and though it is not particularly limited, according to a non-limiting example, the inorganic particles may be dispersed by stirring to prepare a slurry, and agglomerated inorganic particles may be dispersed using a ball mill.

The coating slurry includes inorganic particles, a binder, and a solvent.The solvent is not particularly limited and may be a solvent which is easy to dissolve or disperse the binder. For example, any one or more selected from water, lower alcohols, such as, ethanol, methanol, and propanol, dimethylformamide, acetone, tetrahydrofuran, diethyl ether, methylene chloride, DMF, N-ethyl-2-pyrrolidone, hexane, and cyclohexane, or combinations thereof may be used as the solvent.

In an example embodiment, a solid content of the coating slurry is not particularly limited, but for example, may be 10 wt% to 50 wt%, 15 wt% to 40 wt%, or 20 wt% to 35 wt%, but is not limited thereto.

In an example embodiment, the coating slurry may include 50 to 99.9 wt% of the inorganic particles and 0.1 to 50 wt% of the binder, specifically 60 to 98 wt% of the inorganic particles and 2 to 40 wt% of the binder, and more specifically 80 to 98 wt% of the inorganic particles and 2 to 20 wt% of the binder, based on the total weight of the solid content, but is not limited thereto.

Any common method known in the art may be applied to the method for applying the coating slurry in the second step without limitation, and according to a non-limiting example, roll coating, spin coating, dip coating, bar coating, die coating, slit coating, inkjet printing, and a combination of these methods may be applied. The applied slurry may be dried and formed into an inorganic particle layer. The drying may be performed by drying by warm air, hot air, or low-humidity air, vacuum drying, irradiation with far infrared rays or electron beams, and similar or equivalent drying techniques. Since a drying temperature is not particularly limited, it may be appropriately adjusted depending on the experimental environment or purpose, and for example, may be 30°C to 120°C, 30°C to 100°C, or 30°C to 60°C.

The present disclosure may provide a lithium secondary battery including the separator according to an example embodiment of the example embodiments described above. Since the lithium secondary battery includes the separator as described above, it may have significantly excellent life characteristics with reduced electrical resistance and excellent thermal stability at a high temperature.

The lithium secondary battery according to an example embodiment may include the separator described above between a positive electrode and a negative electrode. Herein, the positive electrode and the negative electrode may be used without limitation as long as they are commonly used in the lithium secondary battery.

Hereinafter, the constituent elements of the secondary battery according to the present disclosure will be further described.

[Positive electrode]

A positive electrode may include a positive electrode current collector and a positive electrode active material layer disposed on at least one surface of the positive electrode current collector.

(Positive electrode current collector)

A positive electrode current collector may include stainless steel, nickel, aluminum, titanium, or an alloy thereof. The positive electrode current collector may include carbon, nickel, titanium, or aluminum of which the surface is treated with silver, or stainless steel. Though the positive electrode current collector is not limited thereto, thickness may be, for example, 10 um to 50 μm.

(Positive electrode material)

A positive electrode active material layer may include a positive electrode active material. The positive electrode active material may include a compound which may reversibly intercalate and deintercalate lithium ions.

According to example embodiments, the positive electrode active material may be used without limitation as long as it is a conventionally used positive electrode active material, and for example, the positive electrode active material may include a lithium-nickel metal oxide. The lithium-nickel metal oxide may further include at least one of cobalt (Co), manganese (Mn), and aluminum (Al).

The positive electrode active material may further include a coating element or a doping element. For example, the auxiliary elements described above and elements substantially identical or similar thereto may be used as a coating element or a doping element. For example, among the elements described above, a single or a combination of two or more is used as a coating element or a doping element.

The positive electrode active material may include a nickel-cobalt-manganese (NCM)-based lithium oxide. In this case, an NCM-based lithium oxide having an increased nickel content may be used.

The content of Ni in the NCM-based lithium oxide (for example, the mole fraction of nickel of the total moles of nickel, cobalt, and manganese) may be 0.6 or more, 0.7 or more, or 0.8 or more. In some example embodiment, the content of Ni may be 0.8 to 0.95, 0.82 to 0.95, 0.83 to 0.95, 0.84 to 0.95, 0.85 to 0.95, or 0.88 to 0.95.

In some example embodiments, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

(Method for manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode active material layer. The coating process may be performed by a method such as gravure coating, slot die coating, multilayer simultaneous die coating, imprinting, doctor blade coating, dip coating, bar coating, and casting, but is not limited thereto. The positive electrode active material layer may further include a binder, and may optionally further include a conductive material, a thickener, and further optional components.

(Positive electrode solvent)

A non-limiting example of the solvent used in the preparation of the positive electrode slurry may include N-methyl-2-pyrrolidone (NMP), dimethyl formamide, dimethyl acetamide, N,N-dimethylaminopropylamine, ethylene oxide, tetrahydrofuran, and similar or equivalent solvents.

(Positive electrode binder)

The binder may include polyvinylidene fluoride (PVDF), poly(vinylidene fluoride-co-hexafluoropropylene, polyacrylonitrile, polymethyl methacrylate, acrylonitrile butadiene rubber (NBR), polybutadiene rubber (BR), styrene-butadiene rubber (SBR), and similar binder materials. In an example embodiment, a PVDF-based binder may be used as a positive electrode binder.

(Positive electrode conductive material)

The conductive material may be added for increasing conductivity of the positive electrode active material layer and/or mobility of lithium ions or electrons. For example, the conductive material may include carbon-based conductive materials such as graphite, carbon black, acetylene black, ketjen black, graphene, carbon nanotubes, vapor-grown carbon fiber (VGCF), and carbon fiber, and/or metal-based conductive materials including tin oxide, titanium oxide, perovskite materials such as $LaSrCoO_3$, $LaSrMnO_3$, but is not limited thereto.

(Positive electrode thickener/ dispersant)

If necessary, the positive electrode slurry may further include a thickener and/or a dispersant and optionally further components or functional additives. As an example embodiment, the positive electrode slurry may include a thickener such as carboxymethyl cellulose (CMC).

[Negative electrode]

A negative electrode may include a negative electrode current collector, and a negative electrode active material layer disposed on at least one surface of the negative electrode current collector.

(Negative electrode current collector)

A non-limiting example of the negative electrode current collector may include a copper foil, a nickel foil, a stainless steel foil, a titanium foil, a nickel foam, a copper foam, a polymer substrate coated with a conductive metal, and similar or equivalent materials. The negative electrode current collector is not limited, but thickness may be, for example, 10 to 50 $\mu$m.

(Negative electrode material)

A negative electrode active material layer may include a negative electrode active material. As the negative electrode active material, a material capable of adsorbing or desorbing lithium ions may be used. For example, the negative electrode active material may be a carbonaceous material such as crystalline carbon, amorphous carbon, carbon composite, and carbon fiber; lithium metal; lithium alloy; a silicon (Si)-containing material, a tin (Sn)-containing material, or the like.

An example of the amorphous carbon may include hard carbon, soft carbon, coke, mesocarbon microbead (MCMB), mesophase pitch-based carbon fiber (MPCF), and similar amorphous carbon materials.

An example of the crystalline carbon may include graphite-based carbon such as natural graphite, artificial

graphite, graphitized coke, graphitized MCMB, and graphitized MPCF.

The lithium metal may include a pure lithium metal or a lithium metal on which a protective layer is formed for suppressing dendrite growth. In an example embodiment, a lithium metal-containing layer which is deposited or coated on a negative electrode current collector may be used as a negative electrode active material. In an example embodiment, a lithium thin film layer may be used as a negative electrode active material layer.

An element included in the lithium alloy may include aluminum, zinc, bismuth, cadmium, antimony, silicon, lead, tin, gallium, indium, or the like.

The silicon-containing material may provide more increased capacity characteristics. The silicon-containing material may include Si, $SiO_x$ (0<x<2), metal-doped $SiO_x$ (0<x<2), a silicon-carbon composite, similar Si-containing materials. The metal may include lithium and/or magnesium, and the metal-doped $SiO_x$ (0<x<2) may include metal silicate.

(Method for manufacturing negative electrode)

For example, the negative electrode active material may be mixed into the solvent to prepare a negative electrode slurry. After coating/depositing the negative electrode slurry on the negative electrode current collector, drying and rolling may be performed to manufacture a negative electrode active material layer. The coating process may be performed by a method such as gravure coating, slot die coating, multilayer simultaneous die coating, imprinting, doctor blade coating, dip coating, bar coating, and casting, but is not limited thereto. The negative electrode active material layer may further include a binder, and may optionally further include a conductive material, a thickener, and further components or functional additives.

In some example embodiments, the negative electrode may include a negative electrode active material layer in a lithium metal form formed by a deposition/coating process.

(Negative electrode solvent)

A non-limiting example of the solvent which is used in preparing the negative electrode slurry may include water, pure water, deionized water, distilled water, ethanol, isopropanol, methanol, acetone, n-propanol, t-butanol, and other solvents.

(Negative electrode binder/ conductive material/ thickener)

As the binder, the conductive material, and the thickener, the materials described above which may be used in the manufacture of a positive electrode may be used.

In some example embodiments, a styrene-butadiene rubber (SBR)-based binder, carboxymethyl cellulose (CMC), a polyacrylic acid-based binder, a poly(3,4-ethylenedioxythiophene) (PEDOT)-based binder, and similar binder materials may be used as a negative electrode binder.

[Electrode assembly]

According to example embodiments, the positive electrode, the negative electrode, and the separator may be repeatedly disposed to form an electrode assembly. In some example embodiments, the electrode assembly may be a winding type, a stacking type, a zigzag (z)-folding type, or a stack-folding type.

[Electrolyte]

A lithium secondary battery may be defined by housing the electrode assembly in a case with an electrolyte. According to example embodiments, a nonaqueous electrolyte solution may be used as the electrolyte.

(Lithium salt/ organic solvent)

A nonaqueous electrolyte solution includes a lithium salt as an electrolyte and an organic solvent, the lithium salt is represented by, for example, $Li^+X^-$, and an example of an anion ($X^-$) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN-, $(CF_3CF_2SO_2)\ _2N^-$, and similar lithium salts.

The organic solvent has sufficient solubility of the lithium salt or the additive and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethyl methyl carbonate (EMC), methyl propyl carbonate,

ethyl propyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethylsulfoxide, acetonitrile, dimethoxyethane, sulfolane, gamma-butyrolactone, propylene sulfite, and similar organic solvents. These may be used alone or in combination of two more.

(Additive)

The nonaqueous electrolyte solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, borate-based compounds, and combinations thereof. The cyclic carbonate-based compound may include vinylene carbonate (VC), vinyl ethylene carbonate (VEC), or the like. The fluorine-substituted carbonate-based compound may be a fluorine-substituted cyclic carbonate-based compound. The fluorine-substituted cyclic carbonate-based compound may include fluoroethylene carbonate (FEC) and similar carbonates. The sultone-based compound may include 1,3-propane sultone, 1,3-propene sultone, 1,4-butane sultone, and similar sultone compounds. The cyclic sulfate-based compound may include 1,2-ethylene sulfate, 1,2-propylene sulfate, and similar sulfate compounds. The cyclic sulfite-based compound may include ethylene sulfite, butylene sulfite, and similar sulfite compounds. The phosphate-based compound may include lithium difluoro bis-oxalato phosphate, lithium difluoro phosphate, and similar phosphate compounds. The borate-based compound may include lithium bis(oxalate) borate and similar borate compounds.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

First, a method for measuring physical properties of a separator and a method for evaluating properties of a secondary battery will be described.

**[Average particle diameter of inorganic particles]**

An average particle diameter was derived from particle size distribution results obtained by collecting a sample of particles to be measured in accordance with the standard of ISO 13320-1 and performing analysis using S3500 available from MICROTRAC.

**[Molecular weight]**

Measurement of a weight average molecular weight was performed by using GPC (EcoSEC HLC-8320 GPC Reflective Index detector from Tosoh Corporation), TSKgel guard PWxl, two TSKgel GMPWxls, and TSKgel G2500PWxl (7.8×300 mm) were connected and used as a gel permeation chromatography (GPC) column, a 0.1 M aqueous $NaNO_3$ solution was used as a solvent, Polyethylene glycol/polyethylene oxide (PEG/PEO) was used as a reference material, and analysis was performed at 40°C at a flow rate of 1 mL/min.

1) Gel permeation chromatography (GPC) sample treatment

(1) Sample pretreatment: using the provided sample as it was
(2) Sample dissolution state: complete dissolution
(3) Sample solution filtration: 0.45 um Nylon filter

2) Gel permeation chromatography (GPC) analysis instrument conditions

(1) Analysis instrument: EcoSEC HLC-8320 GPC available from Tosoh Corporation
(2) Detector: RI-detector
(3) Developing solvent: 0.1 M $NaNO_3$
(4) Column (maker, model no.): Tskgel guard PWxl+ 2×TSKgel GMPWxl + TSKgel G2500PWxl (7.8×300 mm)
(5) Temperature: 40°C
(6) Flow velocity: 1.0 mL/min
(7) Injection amount: 100 μl, 10 mg/mL

(8) Reference material: PEG/PEO

**[Porosity of porous substrate]**

The porosity was calculated by the following equation after cutting a rectangular sample of A cm×B cm. Both A and B were measured by cutting them into a range of 5 to 20 cm.

$$\text{Porosity of PE film} = \{1-(M\div\rho)\div(A\times B\times T)\}\times 100$$

wherein T = thickness of separator (cm),

M = sample weight (g),
ρ = true density (g/cm$^3$) of PE film.

**[Gurley permeability of porous substrate]**

A Gurley permeability of the porous substrate was measured according to the standard of ASTM D726, using Densometer available from Toyoseiki. The time it took for 100 cc of air to pass a porous substrate having an area of 1 in$^2$ was recorded in seconds and compared.

**[Tensile strength]**

Tensile strength of a porous substrate was measured in accordance with ASTM D882.

**[FT-IR spectrum measurement]**

A separator was cut into a size of 1 cm×1 cm to prepare a measurement sample, and measurement was performed using a Fourier transform infrared (FT-IR) instrument (available from Thermo Scientific, Nicolet iN10 Infrared Microscope) equipped with a mercury cadmium telluride (MCT) detector. A measured average value of main peaks shown in the FT-IR spectrum is shown in the following Table 3.

- Resolution: 4 cm$^{-1}$
- Scans: 16
- Range: 4000 to 675 cm$^{-1}$
- Measurement point per sample: 15 points (10 um spacing) * 15 points (10 um spacing) mapping 3 positions

**[Average thickness (μm) of separator and porous substrate]**

Separators were stacked in 10 layers. The thickness of the stack was measured at 5 random points in the transverse direction with a thickness meter available from Mitutoyo. The sum of the thicknesses was divided by 5 to obtain an average thickness of the 10 layers. That average thickness of the 10 layers is divided by 10 to obtain an overall average thickness of a single separator.

The average thickness of the porous substrate was determined by stacking only the porous substrates in 10 layers, measuring the thickness of the stack at 5 random points in the transverse direction with a thickness meter available from Mitutoyo; dividing the sum of the thicknesses by 5 to obtain an average thickness of the 10 layers, and dividing the average by 10 again to obtain an average thickness of the porous substrate. In the case of after forming the inorganic particle layer, the inorganic particle layer was detached to obtain the bare porous substate. The bare porous substrate was dried ; and the average thickness of the porous substrate from which the inorganic particle layer was detached(detachment method, such as, e.g. 3M tape, scrubbing, optionally with ultrasonic treatment) was measured by the method described above..

The total thickness of the inorganic particle layer was obtained by by subtracting an average thickness of the porous substrate from the overall average thickness of the separator determined by the methods described above.

**[Heat shrinkage rate (%)]**

A separator was cut into a square shape with a side of 10 cm and a transverse direction (TD) and a machine direction (MD) were indicated. A sample was placed in the center, 5 sheets of paper were placed on and below the sample,

respectively, and the four sides of the papers were wrapped with tape. The sample wrapped in papers was allowed to stand in a hot air drying oven at 150 °C for 60 minutes. Thereafter, the sample was taken out, the separator was measured with a camera, and shrinkage rates in the machine direction (MD) and in the transverse direction (TD) were calculated using the following equations:

MD heat shrinkage rate (%) = (length in MD before heating - length in MD after heating)/length in MD before heating × 100

TD heat shrinkage rate (%) = (length in TD before heating - length in TD after heating)/length in TD before heating × 100

**[Adhesive strength]**

A separator was cut into a size of 50 mm wide×50 mm long and positioned so that the inorganic particle layer was on top. A piece of black drawing paper (20 mm wide× 150 mm long× 0.25 mm thick) having a coefficient of dynamic friction of 0.15 was placed thereon. A pressing device was used to apply a certain pressure (200 g/cm$^2$), the black drawing paper was forcibly pulled to the side, and a degree of inorganic substance adhered on the surface was confirmed and determined as A/B/C/D/E/F depending on the adhesion degree, referring to the following grade:

A: no adhesion
B: inorganic substance adhered in a small amount

In C-F, the binder and the inorganic substance were adhered and the degree of adhesion was more and more severe from C toward F.

**[Resistance properties of battery]**

Each battery manufactured according to the examples and the comparative examples was charged at a constant current-constant voltage (CC-CV) of 4.2 V using a charge/discharge cycle instrument, and then discharged. Specifically, each battery was charged at constant current with a 0.5 C rate at 25°C until the voltage reached 4.2 V, and charged at constant voltage until the current was 0.01 C while maintaining 4.2 V. Subsequently, a cycle of discharging at a constant current of 0.5 C until the voltage reached 3.0 V during discharging was repeated 600 times. When a state of charge (SoC) at the 600th charge/discharge cycle was 60%, direct current internal resistance (DC-IR) during discharging was measured by a J-pulse method to derive a resistance value.
At this time, the resistance value of each battery manufactured according to the examples and the comparative examples was relatively evaluated based on the resistance value of Example 1.

**<Example 1>**

Manufacture of separator

96.5 wt% of boehmite ($\gamma$-AlOOH) having an average particle diameter (D50) of 0.2 μm as inorganic particles, and 3.0 wt% of a polyacrylamide-based resin (Mw=200,000 g/mol, acrylamide and 2-hydroxyethylmethacrylate 90 mol%:10 mol%) and 0.5 wt% of polyvinyl alcohol (degree of saponification : 85 mol%, Mw: 45,000 g/mol) as a binder, based on the total weight of the solid content, were added to water, and then stirring was performed to prepare a coating slurry having a solid content concentration of 28 wt%.
A polyethylene porous film (A1) having an average thickness of 9 um was used as a porous substrate. 2.9 g/m$^2$ of the coating slurry prepared above was applied on both surfaces of the porous substrate and then dried to manufacture a separator in which the inorganic particle layers were formed on both surfaces of the porous substrate.

Manufacture of secondary battery:

94 wt% of $LiCoO_2$ as a positive electrode active material, 2.5 wt% of polyvinylidene fluoride as a fusing agent, and 3.5 wt% of carbon black as a conductive agent were added to N-methyl-2-pyrrolidone (NMP) as a solvent, and stirring was performed to prepare a uniform positive electrode slurry. The slurry prepared above was coated on an aluminum foil having a thickness of 30 μm, dried, and pressed to manufacture a positive electrode having a total thickness of 150 μm. 95 wt% of artificial graphite as a negative electrode active material, 3 wt% of acryl-based latex having Tg of -52°C as a fusing agent,

and 2 wt% of carboxymethyl cellulose (CMC) as a thickener were added to water as a solvent, and stirring was performed to prepare a uniform negative electrode slurry. The slurry prepared above was coated on a copper foil having a thickness of 20 μm, dried, and pressed to manufacture a negative electrode having a total thickness of 150 um. A pouch type battery was assembled by stacking the separator manufactured above between the positive electrode and the negative electrode. The positive electrode, the negative electrode, and the separator together were heat-fused at 80°C, 1 MPa with a heat press machine to form the assembled battery. Thereafter, an electrolyte in which 1 M lithium hexafluorophosphate ($LiPF_6$) was dissolved in a solution including ethylene carbonate (EC), ethyl methyl carbonate (EMC), and dimethyl carbonate (DMC) at a volume ratio of 3:5:2 was injected the pouch type battery, and the battery was sealed to manufacture a secondary battery having a capacity of 2 Ah.

**<Examples 2 to 5>**

Separators and secondary batteries were manufactured in the same manner as in Example 1, except that in the manufacture of the separator, the average particle diameter of the inorganic particles, the type of porous substrate, and the application amount of the coating slurry were changed as shown in the following Table 1. The first and second inorganic particles were boehmite (γ-AlOOH).

**<Example 6>**

A separator and a secondary battery were manufactured in the same manner as in Example 1, except that in the manufacture of the separator, only 3.5 wt% of a polyacrylamide-based resin was used without using the polyvinyl alcohol as the binder, and the porous substrate which was pretreated by the following method was used. The pretreated porous substrate was manufactured by a corona discharge treatment of both surfaces of the polyethylene porous film (A1) having an average thickness of 9 um. The corona discharge treatment was performed at a power density of 2 W/mm and a rate of 3 to 20 mpm (meter per minute).

**<Example 7>**

A separator and a secondary battery were manufactured in the same manner as in Example 1, except that polyacrylamide having a weight average molecular weight of 200,000 g/mol was used instead of the polyacrylamide-based resin used in the manufacture of the separator of Example 1.

**<Comparative Examples 1 to 4>**

Separators and secondary batteries were manufactured in the same manner as in Example 1, except that in the manufacture of the separator, the average particle diameter of the inorganic particles, the type of porous substrate, and the application amount of the coating slurry were changed as shown in the following Table 1. The first and second inorganic particles were boehmite (γ-AlOOH).

[Table 1]

| | Inorganic particles | | | Porous substrate | | Slurry application amount ($g/m^2$) |
|---|---|---|---|---|---|---|
| | D50 (μm) of first inorganic particles | D50 (μm) of second inorganic particles | Weight ratio between first and second inorganic particles | Type | Average thickness (μm) | |
| Example 1 | 0.2 | Not added | - | A1 | 9 | 2.9 |
| Example 2 | 0.3 | Not added | - | A2 | 10 | 5.5 |
| Example 3 | 0.2 | 0.7 | 7:3 | A3 | 12 | 3.2 |
| Example 4 | 0.3 | 0.7 | 7:3 | A1 | 9 | 6.8 |
| Example 5 | 0.2 | 0.7 | 6:4 | A1 | 9 | 3.0 |
| Example 6 | 0.2 | Not added | - | A1 | 9 | 2.9 |
| Example 7 | 0.2 | Not added | - | A1 | 9 | 2.9 |
| Comparative Example 1 | 0.7 | Not added | - | A3 | 12 | 2.5 |

(continued)

| | Inorganic particles | | | Porous substrate | | Slurry application amount ($g/m^2$) |
|---|---|---|---|---|---|---|
| | D50 ($\mu m$) of first inorganic particles | D50 ($\mu m$) of second inorganic particles | Weight ratio between first and second inorganic particles | Type | Average thickness ($\mu m$) | |
| Comparative Example 2 | 0.4 | Not added | - | A1 | 9 | 1.5 |
| Comparative Example 3 | 0.4 | 0.7 | 3:7 | A4 | 5 | 3.5 |
| Comparative Example 4 | 1.0 | Not added | - | A1 | 9 | 1.5 |

A1: PE film (porosity: 430, Gurley permeability: 119 sec/100 cc, tensile strength MD 2,741 $kgf/cm^2$, TD 2,815 $kgf/cm^2$)
A2: PE film (porosity: 420, Gurley permeability: 109 sec/100 cc, tensile strength MD 2,055 $kgf/cm^2$, TD 2,177 $kgf/cm^2$)
A3: PE film (porosity: 420, Gurley permeability: 136 sec/100cc, tensile strength MD 1,936 $kgf/cm^2$, TD 2,231 $kgf/cm^2$)
A4: PE film (porosity: 40%, Gurley permeability: 92 sec/100 cc, tensile strength MD 3,018 $kgf/cm^2$, TD 2,451 $kgf/cm^2$)

(Application amount: weight of coating layer per unit area of separator)

The physical properties of the separators manufactured in the examples and the comparative examples and the resistance properties of the secondary batteries were measured and are shown in the following Table 2. In addition, the results of measuring the FT-IR spectra of the separators manufactured in the examples and the comparative examples are shown in the following Table 3.

[Table 2]

| | $t_1$ ($\mu m$) | $t_1/t_2$ | Heat shrinkage rate (%) | | Adhesive strength | Resistance properties of secondary battery |
|---|---|---|---|---|---|---|
| | | | MD | TD | | |
| Example 1 | 2.0 | 0.22 | 2.5 | 2.5 | A | Reference |
| Example 2 | 5.0 | 0.55 | 0.8 | 1.0 | A | Higher by 5% |
| Example 3 | 2.4 | 0.20 | 2.1 | 2.0 | A | Higher by 1% |
| Example 4 | 6.0 | 0.60 | 0.2 | 0.3 | A | Higher by 5% |
| Example 5 | 2.0 | 0.22 | 3.1 | 3.5 | A | Higher by 3% |
| Example 6 | 2.0 | 0.22 | 2.3 | 3.0 | A | Higher by 1% |
| Example 7 | 2.0 | 0.22 | 2.5 | 2.7 | A | Higher by 5% |
| Comparative Example 1 | 2.4 | 0.20 | 37 | 42 | C | Higher by 25% |
| Comparative Example 2 | 1.3 | 0.14 | 52 | 60 | C | Higher by 20% |
| Comparative Example 3 | 3.1 | 0.61 | 15 | 20 | B | Higher by 30% |
| Comparative Example 4 | 1.6 | 0.18 | 60 | 62 | D | Higher by 25% |

$t_1$: total thickness of inorganic particle layer (um)
$t_2$: average thickness of porous substrate ($\mu m$)

[Table 3]

| Peak position ($cm^{-1}$) | 1 | 2 | 3 | 4 | 5 |
|---|---|---|---|---|---|
| Example 1 | 2919.8 | 3297.8 | 3099.2 | 1072.0 | 1149.6 |
| Example 2 | 2919.8 | 3297.8 | 3099.1 | 1078.0 | 1149.5 |

(continued)

| Peak position ($cm^{-1}$) | 1 | 2 | 3 | 4 | 5 |
|---|---|---|---|---|---|
| Example 3 | 2919.7 | 3286.4 | 3095.4 | 1080.0 | 1149.4 |
| Example 4 | 2919.7 | 3286.4 | 3095.3 | 1081.0 | 1149.4 |
| Example 5 | 2919.7 | 3286.4 | 3095.4 | 1073.5 | 1149.5 |
| Example 6 | 2919.8 | 3297.9 | 3099.2 | 1072.2 | 1149.6 |
| Example 7 | 2919.8 | 3297.8 | 3099.2 | 1072.5 | 1149.6 |
| Comparative Example 1 | 2919.6 | 3280.5 | 3095.3 | 1083.8 | 1147.5 |
| Comparative Example 2 | 2919.6 | 3288.2 | 3095.6 | 1081.9 | 1149.4 |
| Comparative Example 3 | 2919.7 | 3282.8 | 3095.5 | 1082.0 | 1147.8 |
| Comparative Example 4 | 2919.7 | 3280.5 | 3094.6 | 1084.0 | 1147.4 |

As seen from Tables 2 and 3, the separators of the examples, which had the ratio of the total thickness of the inorganic particle layer to the thickness of the porous substrate of 0.2 to 0.6 and the peak shown in a range of 1070 to 1082 $cm^{-1}$ in the FT-IR spectrum (also denoted as "first peak" in the present disclosure), had excellent heat resistance of a heat shrinkage rate of 5% or less and excellent adhesive strength with no adhesion in the adhesive strength test. In addition, the discharge resistance after 600th cycle of the battery with the separator applied was low, less than 5% or less as compared with the value of Example 1 as a reference.

However, since the separator of Comparative Example 1 did not have the peak shown in a range of 1070 to 1082 $cm^{-1}$ in the FT-IR spectrum, its heat resistance was significantly lowered, and the discharge resistance after 600th cycle of the battery with the separator applied was significantly higher than the examples.

Since the separators of Comparative Examples 2 and 3 had the peak shown in a range of 1070 to 1082 $cm^{-1}$ in the FT-IR spectrum, but did not satisfy the ratio of the total thickness of the inorganic particle layer of the thickness of the porous substrate, their heat resistance was significantly lowered, and the discharge resistance after 600th cycle of the battery with the separator applied was significantly higher than the examples.

Since the separator of Comparative Example 4 did not have the peak shown in a range of 1070 to 1082 $cm^{-1}$ in the FT-IR spectrum and did not satisfy the ratio of the total thickness of the inorganic particle layer of the thickness of the porous substrate, its heat resistance was significantly lowered, and the discharge resistance after 600th cycle of the battery with the separator applied was significantly higher than the examples.

The separator according to the present disclosure may have excellent heat resistance and adhesion.

In addition, since the present disclosure includes the separator according to an example embodiment, a lithium secondary battery having excellent resistance properties and thermal safety may be provided.

The above description is only an example to which the principle of the present disclosure is applied, and other constitutions may be further included.

## Claims

**1.** A separator comprising:

a porous substrate; and
an inorganic particle layer including a binder and inorganic particles on one or respectively on both surface(s) of the porous substrate,
wherein the separator has a ratio of a total thickness of the inorganic particle layer(s) to a thickness of the porous substrate of 0.2 to 0.6,
has a peak shown in a range of 1070 $cm^{-1}$ to 1082 $cm^{-1}$ in a spectrum by Fourier transform infrared spectroscopy (FT-IR), and
has heat shrinkage rates in the machine direction and in the transverse direction of 5% or less as measured after being allowed to stand at 150°C for 60 minutes.

**2.** The separator of claim 1, wherein the inorganic particles include any one or two or more selected from the group consisting of metal hydroxides, metal oxides, metal nitrides, and metal carbides.

**3.** The separator of claim 1 or 2, wherein the inorganic particles have an average particle diameter (D50) of 0.01 um to 0.65 um.

**4.** The separator of any one of claims 1 to 3, wherein the inorganic particles include first type of inorganic particles having an average particle diameter (D50) of 0.01 um to 0.5 um, optionally wherein the inorganic particles further include second type of inorganic particles having a larger average particle diameter (D50) than the first type of inorganic particles, wherein when present the second type of inorganic particles are preferably included at 50 wt% or less based on the total weight of the first type of inorganic particles and the second type of inorganic particles.

**5.** The separator of any one of claims 1 to 4, wherein the peak lies in a more specific range of 1071 $cm^{-1}$ to 1081 $cm^{-1}$ in a spectrum by Fourier transform infrared spectroscopy (FT-IR), and/or wherein the separator has the heat shrinkage rates in the machine direction and in the transverse direction of 3% or less.

**6.** The separator of any one of claims 1 to 5, wherein the porous substrate has a thickness of 5 um to 15 $\mu$m.

**7.** The separator of any one of claims 1 to 6, wherein the binder includes a polyacrylamide-based resin, preferably wherein the polyacrylamide-based resin comprises a copolymer including a unit derived from a (meth)acrylamide-based monomer and a unit derived from a comonomer.

**8.** The separator of claim 7, wherein the polyacrylamide-based resin includes a structural unit derived from the (meth) acrylamide-based monomer and a structural unit derived from a (meth)acryl-based monomer containing a hydroxyl group.

**9.** The separator of claim 7 or 8, wherein the polyacrylamide-based resin has a weight average molecular weight of 100,000 g/mol to 2,000,000 g/mol.

**10.** The separator of any one of claims 1 to 9, wherein the binder is included at 0.1 parts by weight to 20 parts by weight with respect to 100 parts by weight of the inorganic particles.

**11.** The separator of any one of claims 1 to 10, wherein the binder includes a first binder type and one or two or more second binder type(s), wherein the first binder type optionally is defined by any one of claims 7 to 9, and the one or two or more second binder type(s) are selected from the group consisting of polyvinyl alcohol, polyvinylidene fluoride, carboxymethyl cellulose, styrene butadiene rubber, polyacrylic acid, polyethylene glycol, polyacrylonitrile, polyvinylpyrrolidone, copolymers thereof, and combinations thereof.

**12.** The separator of claim 11, wherein a content of the one or two or more second binder type(s)is 0.1 wt% to 30 wt% of the total content of the binder.

**13.** A method for manufacturing a separator, comprising:

providing a porous substrate;
a step of preparing a coating slurry including a binder and inorganic particles; and a step of applying the coating slurry on one or both surfaces of the porous substrate to form an inorganic particle layer respectively on one or both surfaces of the porous substrate;
wherein the separator obtained has a ratio of a total thickness of the inorganic particle layer(s) to a thickness of the porous substrate of 0.2 to 0.6,
and the separator has a peak shown in a range of 1070 $cm^{-1}$ to 1082 $cm^{-1}$ in a spectrum by Fourier transform infrared spectroscopy (FT-IR).

**14.** The method of claim 13, wherein the peak shown in the range of 1070 $cm^{-1}$ to 1082 $cm^{-1}$ is indicating the binding energy between atoms included in the inorganic particles included in the inorganic particle layer, and presence or absence of the peak shown in the range of 1070 $cm^{-1}$ to 1082 $cm^{-1}$ is determined by any one of:

the characteristics of the inorganic particles,
the average particle diameter and materials,
characteristics of the binder or of the porous substrate;
and/or
wherein the method is used to manufacture the separator of any one of claims 1 to 12 by controlling one or more of:

the thicknesses of the porous substrate and of the one or two inorganic particle layers coated on the one or both surfaces of the porous substrate,
the average particle diameter of the inorganic particles,
the combination of first and second types of inorganic particles,
the weight ratio of a plurality of inorganic particles,
the type and content of a binder,
the type and content of an additionally used second type of binder, and
the surface characteristics of the porous substrate.

**15.** A lithium secondary battery comprising the separator of any one of claims 1 to 12.

Europäisches Patentamt
European Patent Office
Office européen des brevets

# EUROPEAN SEARCH REPORT

Application Number
EP 24 21 9627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | EP 3 968 428 A1 (SK INNOVATION CO LTD [KR]; SK IE TECH CO LTD [KR])<br>16 March 2022 (2022-03-16)<br>* paragraphs [0055]-[0056], [0078]-[0080]; claims 1-2, 4-7, 10-11; tables 1-2 *<br>----- | 1-10, 13-15<br><br><br>11,12 | INV.<br>H01M50/403<br>H01M50/446<br>H01M50/489<br>H01M50/451<br><br>ADD.<br>H01M10/052 |
| A | US 2023/061376 A1 (CHO SUNG OH [KR] ET AL)<br>2 March 2023 (2023-03-02)<br>* the whole document *<br>----- | 1-15 | |
| A | JIA SHAOJIN ET AL: "Eco-friendly xonotlite nanowires/wood pulp fibers ceramic hybrid separators through a simple papermaking process for lithium ion battery",<br>JOURNAL OF MEMBRANE SCIENCE, ELSEVIER,<br>vol. 597, 9 December 2019 (2019-12-09),<br>XP086029663,<br>ISSN: 0376-7388, DOI: 10.1016/J.MEMSCI.2019.117725<br>[retrieved on 2019-12-09]<br>* the whole document *<br>----- | 1-15 | TECHNICAL FIELDS SEARCHED (IPC)<br><br>H01M |
| A | GU JIAYI ET AL: "Flexible fibrous separator asymmetrically coated by silica and MXene for high performance lithium batteries with enhanced safety",<br>JOURNAL OF POWER SOURCES, ELSEVIER, AMSTERDAM, NL,<br>vol. 581, 17 August 2023 (2023-08-17),<br>XP087383789,<br>ISSN: 0378-7753, DOI: 10.1016/J.JPOWSOUR.2023.233515<br>[retrieved on 2023-08-17]<br>* the whole document *<br>-----<br>-/-- | 1-15 | |

The present search report has been drawn up for all claims

1

| Place of search | Date of completion of the search | Examiner |
|---|---|---|
| The Hague | 1 May 2025 | Scarfiello, Canio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 21 9627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2011 026645 A (KONICA MINOLTA HOLDINGS INC) 10 February 2011 (2011-02-10)<br>* the whole document *<br>----- | 1-15 | |
| A | KR 101 811 329 B1 (SAMSUNG SDI CO LTD [KR]) 22 December 2017 (2017-12-22)<br>* the whole document *<br>----- | 1-15 | |
| A | EP 3 748 730 A1 (SAMSUNG SDI CO LTD [KR]) 9 December 2020 (2020-12-09)<br>* the whole document *<br>----- | 1-15 | |
| A | EP 4 246 700 A1 (SK INNOVATION CO LTD [KR]; SK IE TECH CO LTD [KR]) 20 September 2023 (2023-09-20)<br>* the whole document *<br>----- | 1-15 | |
| A | EP 3 905 380 A1 (SAMSUNG SDI CO LTD [KR]) 3 November 2021 (2021-11-03)<br>* the whole document *<br>----- | 1-15 | TECHNICAL FIELDS SEARCHED (IPC) |
| Y | US 2019/165349 A1 (KIM YUN BONG [KR] ET AL) 30 May 2019 (2019-05-30)<br>* paragraph [0114]-[0116]; claim 4 *<br>----- | 11,12 | |

The present search report has been drawn up for all claims

1

| Place of search | Date of completion of the search | Examiner |
|---|---|---|
| The Hague | 1 May 2025 | Scarfiello, Canio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 24 21 9627

This annex lists the patent family members relating to the patent documents cited in the above-mentioned European search report. The members are as contained in the European Patent Office EDP file on
The European Patent Office is in no way liable for these particulars which are merely given for the purpose of information.

01-05-2025

| Patent document cited in search report | | Publication date | Patent family member(s) | | | Publication date |
|---|---|---|---|---|---|---|
| EP 3968428 | A1 | 16-03-2022 | CN | 114171844 | A | 11-03-2022 |
| | | | EP | 3968428 | A1 | 16-03-2022 |
| | | | KR | 20220033688 | A | 17-03-2022 |
| | | | US | 2022077543 | A1 | 10-03-2022 |
| US 2023061376 | A1 | 02-03-2023 | NONE | | | |
| JP 2011026645 | A | 10-02-2011 | JP | 5636646 | B2 | 10-12-2014 |
| | | | JP | 2011026645 | A | 10-02-2011 |
| KR 101811329 | B1 | 22-12-2017 | NONE | | | |
| EP 3748730 | A1 | 09-12-2020 | CN | 112054150 | A | 08-12-2020 |
| | | | EP | 3748730 | A1 | 09-12-2020 |
| | | | KR | 20200140637 | A | 16-12-2020 |
| | | | US | 2020388808 | A1 | 10-12-2020 |
| | | | US | 2024006717 | A1 | 04-01-2024 |
| EP 4246700 | A1 | 20-09-2023 | CN | 116780099 | A | 19-09-2023 |
| | | | EP | 4246700 | A1 | 20-09-2023 |
| | | | JP | 2023135650 | A | 28-09-2023 |
| | | | KR | 20230134783 | A | 22-09-2023 |
| | | | US | 2023299421 | A1 | 21-09-2023 |
| | | | US | 2025070385 | A1 | 27-02-2025 |
| EP 3905380 | A1 | 03-11-2021 | CN | 113273027 | A | 17-08-2021 |
| | | | EP | 3905380 | A1 | 03-11-2021 |
| | | | KR | 20200079905 | A | 06-07-2020 |
| | | | US | 2022037739 | A1 | 03-02-2022 |
| | | | WO | 2020138627 | A1 | 02-07-2020 |
| US 2019165349 | A1 | 30-05-2019 | CN | 109841784 | A | 04-06-2019 |
| | | | DE | 102018130080 | A1 | 29-05-2019 |
| | | | JP | 7285634 | B2 | 02-06-2023 |
| | | | JP | 2019102453 | A | 24-06-2019 |
| | | | KR | 20190062924 | A | 07-06-2019 |
| | | | US | 2019165349 | A1 | 30-05-2019 |

EPO FORM P0459

For more details about this annex : see Official Journal of the European Patent Office, No. 12/82